# EUROPÄISCHE PATENTSCHRIFT

(11) **EP 2 672 150 B1**
(45) Veröffentlichungstag und Bekanntmachung des Hinweises auf die Patenterteilung: **11.08.2021**
(21) Anmeldenummer: 13161509.8
(22) Anmeldetag: 28.03.2013
(51) Int. Cl.: F16H 61/444

(54) **Fahrzeugs mit einer hydrostatischen Antriebseinheit**
Vehicle with a hydrostatic drive unit
Véhicule avec une unité d'entraînement hydrostatique

(30) Priorität: 04.06.2012 DE 102012010946
(43) Veröffentlichungstag der Anmeldung: 11.12.2013
(73) Patentinhaber: CLAAS Selbstfahrende Erntemaschinen GmbH, 33428 Harsewinkel (DE)
(72) Erfinder: Behra, Jan-Philipp, 33332 Gütersloh (DE); Wagemann, Sebasdtian, 59302 Oelde (DE)
(74) Vertreter: CLAAS Gruppe

(56) Entgegenhaltungen:
- EP-A1- 2 009 329
- EP-A2- 1 586 479
- WO-A1-01/26951
- DE-A1- 2 807 351
- DE-A1- 19 539 043
- US-A- 4 570 741

## Beschreibung

Die Erfindung betrifft ein Fahrzeug, vorzugsweise eine selbstfahrende landwirtschaftliche Arbeitsmaschine zumindest einen Antriebsmotor und eine hydrostatische Antriebseinheit umfassend, wobei zumindest eine erste und eine zweite Fahrzeugachse über einen die hydrostatische Antriebseinheit umfassenden Hydraulikkreislauf mit dem Antriebsmotor gekoppelt ist wobei der Antriebsmotor mit zumindest einer ersten und einer zweiten Hydropumpe gekoppelt ist und jeder der Fahrzeugachsen ein Hydromotor zugeordnet ist der von jeweils zumindest einer der Hydropumpen gespeist wird, nach dem Oberbegriff des Anspruchs 1.

Aus der EP 2 009 329 ist ein Fahrzeug bekannt geworden, dessen Fahrzeugachsen im Allradbetrieb laufen können. Hierzu ist ein Hydraulikreislauf vorgesehen, dessen Hydraulikpumpe eingangsseitig gegebenenfalls unter Zwischenschaltung eines in Stufen schaltbaren Getriebes mit dem als Verbrennungsmotor ausgeführten Antriebsmotor gekoppelt ist. Ausgangsseitig steht die Hydraulikpumpe über Verteiler mit den den Fahrzeugrädern zugeordneten Hydromotoren in Wirkverbindung. Derartig Antriebssysteme sind wegen ihrer sogenannten vollhydraulischen Ausführung kostenintensiv und weisen zudem wegen der erheblichen Wärmeentwicklung einen im Vergleich zu mechanischen Systemen niedrigeren Wirkungsgrad auf. Daher sind kombinierte hydro-mechanische Allradantriebe weit verbreitet, wobei diese jedoch den Nachteil aufweisen, dass die Pumpenleistung häufig das leistungsbegrenzende Element ist und zudem das Zu- und Abschalten der Allradfunktion sowie Fahrstufenwechsel im Stand der Maschine durchgeführt werden müssen.

Aus der DE 2 807 351 A1 ist ein gattungsgemäßes allradgetriebenes Fahrzeug bekannt geworden, bei dem jeder Achse eine Hydraulikeinheit zugeordnet ist, sodass jeder der Fahrzeugachsen hydraulisch antreibbar ist und das Fahrzeug damit mittels Allradantrieb bewegbar ist. derartige Systeme haben den Nachteil, dass das Fahrzeug stets im Allradbetrieb läuft, was bei bestimmten Untergrundbedingungen nicht erforderlich wäre und so zumindest eine Verschlechterung des Wirkungsgrades eintritt.

Es ist deshalb Aufgabe der Erfindung die beschriebenen Nachteile des Standes der Technik zu vermeiden und insbesondere ein Fahrzeug mit hydrostatischer Fahreinheit vorzuschlagen, welches kosteneffizient arbeitet, einen hohen Wirkungsgrad aufweist und zudem über einen hohen Fahrkomfort verfügt.

Diese Aufgabe wird erfindungsgemäß durch die kennzeichnenden Merkmale des Anspruchs 1 gelöst.

Indem das Fahrzeug, vorzugsweise eine selbstfahrende landwirtschaftliche Arbeitsmaschine zumindest einen Antriebsmotor und eine hydrostatische Antriebseinheit aufweist und die Fahrzeugachsen über einen die hydrostatische Antriebseinheit umfassenden Hydraulikkreislauf mit dem Antriebsmotor gekoppelt ist, wobei der Antriebsmotor mit zumindest einer ersten und einer zweiten Hydropumpe verbunden und jeder der Fahrzeugachsen ein Hydromotor zugeordnet ist der von jeweils zumindest einer der Hydropumpen gespeist wird, wird sichergestellt, dass die Fahrzeugachsen unabhängig voneinander antreibbar sind und die Allradfunktion während der Bewegung des Fahrzeugs aktivier- und deaktivierbar ist. Zudem stellen die mehreren mit dem Antriebsmotor gekoppelt Hydropumpen sicher, dass stets ausreichend Antriebsenergie an der einen oder den mehreren treibenden Fahrzeugachsen verfügbar ist, sodass das Fahrzeug unabhängig von den Bodenbeschaffenheiten einen hohen Fahrkomfort aufweist.

Erfindungsgemäß ist zumindest einer der Hydromotoren mittels einer Klauenkupplung, von der mit dem jeweiligen Hydromotor in Wirkverbindung stehenden Fahrzeugachse entkuppel- oder kuppelbar, sodass die Allradfunktion bedarfsweise zu- und abschaltbar ist.

Eine konstruktiv einfache Umsetzung der Zu- und Abschaltbarkeit der Allradfunktion wird auch dadurch unterstützt, dass der Hydraulikkreislauf zumindest erste und zweite Teilkreisläufe umfasst, denen jeweils zumindest eine Hydropumpe und ein mit dieser koppelbarer Hydromotor zugeordnet sind, wobei die Teilkreisläufe über eine Ventilanordnung in der Weise miteinander gekoppelt sind, dass die Hydraulikkreisläufe unabhängig voneinander betrieben oder zusammengeschaltet werden können.

Indem in einer weiteren vorteilhaften Ausgestaltung der Erfindung die ersten und zweiten Teilkreisläufe zusammengeschaltet und die Hydropumpen beider Teilkreisläufe parallel geschaltet sind, können sie gemeinschaftlich den der zumindest einen Triebachse zugeordneten Hydromotor antreiben. Dies hat den Vorteil, dass auch bei Einachsantrieb ein großes Ölvolumen verfügbar ist, sodass stets ein sicherer Antrieb des Fahrzeugs gewährleistet ist.

Indem bei Parallelschaltung der dem Hydraulikkreislauf zugeordneten Hydropumpen der Antriebsmotor mit reduzierter Drehzahl betrieben wird, kann zudem ein kraftstoffverbrauchsreduzierter Betrieb sichergestellt werden.

In einer vorteilhaften Ausgestaltung der Erfindung weist jede der Fahrzeugachsen eine Abtriebswelle auf, wobei die Drehzahl jeder Abtriebswelle und die Drehzahl des der jeweiligen Fahrzeugachse zugeordneten Hydromotors detektiert werden, sodass stets Informationen über die Drehzahlverhältnisse von Hydromotor und zugeordneter Fahrzeugsachse ermittelbar sind. Eine besonders einfache Ausgestaltung ergibt sich in diesem Zusammenhang dann, wenn die Drehzahl der Hydromotoren und der Abtriebswellen der Fahrzeugachsen sensorisch mittels ansich bekannter Drehzahlsensoren erfasst werden.

Ein hoher Fahrkomfort ergibt sich beim Zuschalten der Allradfunktion während der Fahrt der landwirtschaftlichen Arbeitsmaschine dann, wenn das Einkuppeln des der Lenktriebachse zugeordneten Hydromotors in der Weise erfolgt, dass die Betriebsstadien
a.) der Hydromotor wird in ausgekuppeltem Zustand auf ein geringes oder Nullfördervolumen geschwenkt
b.) die dem Hydromotor zugeordnete Hydropumpe wird auf ein geringes oder Nullfördervolumen geschwenkt
c.) der der Lenktriebachse zugeordnete Hydromotor wird ausgeschwenkt und durch Anpassung des Verhältnisses der Schluckvolumina dieses Hydromotors und der ihm zugeordneten Hydropumpe erfolgt eine Drehzahlanpassung des Hydromotors
d.) die Drehzahl der Abtriebswelle der Lenktriebachse wird erfasst und die Drehzahl des Hydromotors wird mit der sensierten Drehzahl der Abtriebswelle der Lenktriebachse synchronisiert
e.) nach erfolgter Synchronisation wird der Hydromotor eingekuppelt
durchlaufen werden.

Die Verfügbarkeit einer hohen Antriebsleistung, gegebenenfalls gepaart mit einer kraftstoffsparenden Reduzierung der Motordrehzahl wird in einer vorteilhaften Ausgestaltung der Erfindung dann erreicht, wenn zumindest im Schritt a das Fahrzeug im Vorderradantrieb betrieben wird und eine oder mehrere der mit dem Antriebsmotor gekoppelten Hydropumpen zum Antrieb des der Triebachse zugeordneten Hydromotors eingesetzt werden.

Indem im Schritt b die ersten und zweiten Teilkreisläufe des Hydraulikkreislaufs mittels der dem Hydraulikkreislauf zugeordneten Ventilanordnung voneinander getrennt werden, wird ein komfortables Zu- und Abschalten der Allradfunktion während der Fahrt ermöglicht.

Eine kostruktiv einfache Umsetzung des Schrittes d wird in einer vorteilhaften Weiterbildung der Erfindung dann erreicht, wenn die Sensierung der Drehzahlen mittels Drehzahlsensoren erfolgt.

Eine konstruktiv einfache Umsetzung der Zuschaltung der Allradfunktion ergibt sich zudem dann, wenn im Schritt e das Einkuppeln mittels mechanischer Klauenkupplungen erfolgt.

Die Verfügbarkeit einer hohen Antriebsleistung, gegebenenfalls gepaart mit einer kraftstoffsparenden Reduzierung der Motordrehzahl wird in einer vorteilhaften Ausgestaltung der Erfindung auch bei zugeschalteter Allradfunktion dann erreicht, wenn nach dem Einkupplung des der Lenktriebachse zugeordneten Hydromotors in einem Schritt f beide Teilkreisläufe des Hydraulikkreislaufes entweder getrennt oder durch Öffnen der Ventilanordnung gemeinsam betrieben werden.

In analoger Weise werden die beschriebenen Effekte bei der Deaktivierung der Allradfunktion dann erreicht, wenn das Auskuppeln des der Lenktriebachse zugeordneten Hydromotors durch Abarbeitung der Schritte a bis f in umgekehrter Reihenfolge erfolgt.

Eine besonders vorteilhafte Ausgestaltung der Erfindung ergibt sich dann, wenn eine der Fahrzeugachsen als Triebachse ausgebildet und dieser ein in Stufen schaltbares Getriebe zugeordnet ist, wobei die Schaltung des Getriebes bei zugeschaltetem Allradantrieb möglich ist.

In einer vorteilhaften Ausgestaltung der Erfindung wird die Schaltung des Getriebes während der Fahrt auf einfache Weise dadurch erreicht, wenn das Fahrzeug die Betriebsstadien
a.) die Teilkreisläufe des Hydraulikkreislaufs werden durch Schalten der Ventilanordnung voneinander getrennt
b.) die Schluckvolumina der in den Teilkreislauf der Vorderachse integrierten Hydropumpe und Hydromotor werden synchronisiert
c.) das der Vorderachse zugeordnete, in Stufen schaltbare Getriebe wird in den Neutralgang geschaltet
d.) die Drehzahl des der Vorderachse zugeordneten Hydromotors wird durch Änderung seines Schluckvolumens mit der Drehzahl der gewählten Fahrstufe des in Stufen schaltbaren Getriebes synchronisiert
e.) der Hydromotor wird durch Aktivierung der der Triebachse zugeordneten Kupplung eingekuppelt
f.) nach Einkupplung des Hydromotors werden die Teilkreisläufe des Hydraulikkreislaufes entweder getrennt betrieben oder durch Schaltung der Ventilanordnung zusammengeschaltet.
durchläuft.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine erste Ausführung des Fahrzeugs mit erfindungsgemäßem Allradantrieb
- Figur 2: eine zweite Ausführung des Fahrzeugs mit erfindungsgemäßem Allradantrieb
- Figur 3: eine alternative Ausführung des Fahrzeugs mit schaltbarem Getriebe

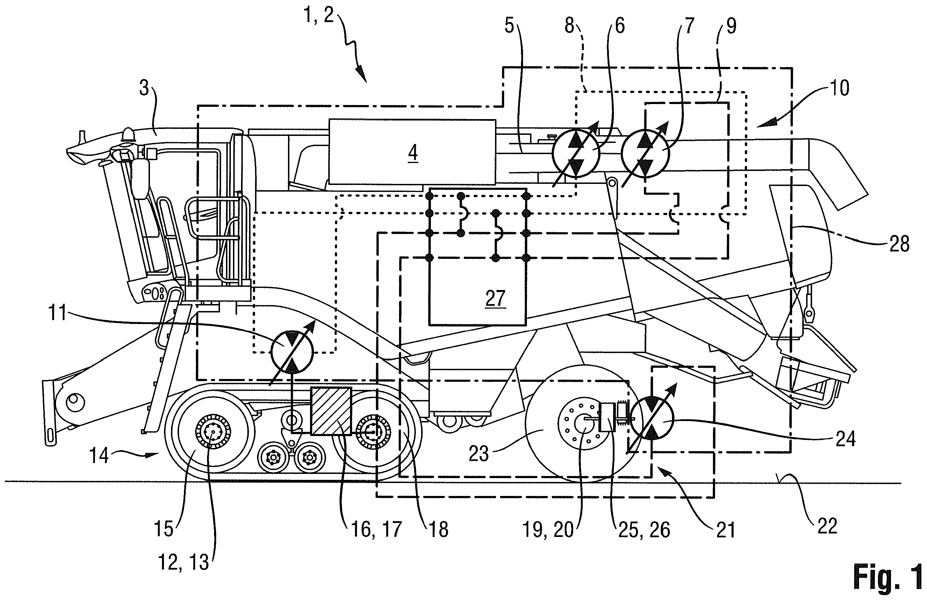

Figur 1 zeigt ein als selbstfahrende landwirtschaftliche Arbeitsmaschine 2, hier Mähdrescher 3, ausgeführtes Fahrzeug 1. Der Mähdrescher 3 verfügt über eine Vielzahl hier nicht näher beschriebener Arbeitsorgane zur Bearbeitung des von ihm aufgenommenen Erntegutes. Da für die Beschreibung der hier vorliegenden Erfindung die Art der landwirtschaftlichen Arbeitsmaschine 2, sei es nun wie hier beispielhaft dargestellt ein Mähdrescher 3 oder eine beliebige andere selbstfahrende landwirtschaftliche Arbeitsmaschine ohne Bedeutung ist, wird hier nur auf diejenigen Elemente des Fahrzeugs 1 Bezug genommen, die für das Beschreiben der Erfindung wesentlich sind.

Das Fahrzeug 1 verfügt über einen in Figur 1 nur schematisch dargestellten Antriebsmotor 4, vorzugsweise einen Dieselmotor, dessen Abtriebswelle 5 erfindungsgemäß zumindest mit einer ersten Hydropumpe 6 und einer zweiten Hydropumpe 7 gekoppelt ist. Jede der Hydropumpen 6, 7 ist in einen aus einem ersten Teilkreislauf 8 und einem zweiten Teilkreislauf 9 bestehenden Hydraulikkreislauf 10 integriert. Der die erste Hydropumpe 6 aufnehmende Kreislauf 8 verfügt zudem über einen Hydromotor 11, der abtriebsseitig mit einer als Triebachse 12 ausgeführten Fahrzeugachse 13, üblicher Weise die Vorderachse 14 des Fahrzeugs 1 in noch näher zu beschreibender Wirkverbindung steht. Im dargestellten Ausführungsbeispiel nimmt die Vorderachse 14 beidseitig Raupenfahrwerke 15 auf, wobei es im Rahmen der Erfindung liegt, dass die Raupenfahrwerke 15 auch durch nicht dargestellte Laufräder ersetzt sein können. Die Vorderachse 14 nimmt in ihrem mittigen Bereich ein an sich bekanntes und daher nicht näher dargestelltes, in Stufen 16 schaltbares Getriebe 17 auf, welches eingangsseitig mit dem der Vorderachse 14 zugeordneten Hydromotor 11 und abtriebsseitig mit dem anzutreibenden Rad, hier dem Triebrad 18 des Raupenfahrwerks 15 in ansich bekannter Weise gekoppelt ist.

Die dem Fahrzeug 1 im rückwärtigen Bereich zugeordnete, als Hinterachse 20 ausgeführte Fahrzeugachse 19 ist erfindungsgemäß und in noch näher zu beschreibender Weise als Lenktriebachse 21 ausgeführt. Die Lenktriebachse 21 nimmt beidseitig das Fahrzeug 1 gegen den Boden 22 abstützende Laufräder 23 auf, wobei es im Rahmen der Erfindung liegt, dass die Laufräder 23 in Analogie zur Vorderachse 14 auch durch nicht dargestellte Raupenlaufwerke ersetzt sein können. Der die zweite Hydropumpe 7 aufnehmende Teilkreislauf 9 des dem Fahrzeug 1 zugeordneten Hydraulikkreislaufs 10 umfasst in erfindungsgemäßer Weise ebenfalls einen Hydromotor 24 der abtriebsseitig in noch näher zu beschreibender Weise über eine als Klauenkupplung 25 ausgeführte Kupplung 26 mit der als Lenktriebachse 21 ausgeführten Hinterachse 20 gekoppelt ist.

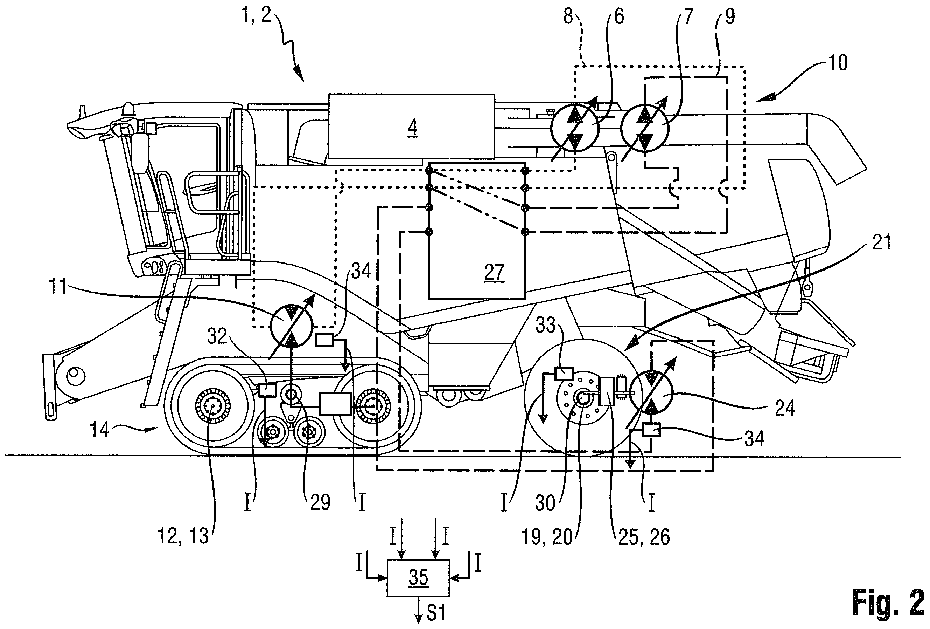

Die den Hydraulikkreislauf 10 bildenden ersten und zweiten Teilkreisläufe 8, 9 sind über eine, in Figur 1 schematisch dargestellte Ventilanordnung 27 in der Weise miteinander gekoppelt, dass sie entweder voneinander unabhängig oder zusammengeschaltet betrieben werden können. Mithin bilden die dem Antriebsmotor 4 zugeordneten Hydropumpen 6, 7, die den Hydraulikkreislauf 10 bildenden Teilkreisläufe 8,9, die sie verbindende Ventilanordnung 27 sowie die den Fahrzeugachsen 13, 19 zugeordneten Hydromotoren 11, 24 die hydrostatische Antriebseinheit 28, mittels derer das Fahrzeug 1 im Allradantrieb betrieben werden kann. Indem zumindest der der Hinterachse 20 zugeordnete Hydromotor 24 über eine Kupplung 26 mit der Hinterachse 20 des Fahrzeugs 1 kuppel- und entkuppelbar ausgeführt ist, wird sichergestellt, dass neben der als Triebachse 12 ausgeführten Vorderachse 14 die Hinterachse 20 als sogenannte Lenktriebachse 21 betreibbar ist. Gemäß Figur 2 kann die in den Hydraulikkreislauf 10 integrierte Ventilanordnung 27 so geschaltet sein, dass die ersten und zweiten Teilkreisläufe 8, 9 miteinander verbunden sind, sodass die dann parallel geschalteten, dem Antriebsmotor 4 zugeordneten Hydropumpen 6, 7 gemeinschaftlich den der Triebachse 12 zugeordneten Hydromotor 11 mit hydraulischer Energie versorgen. In diesem Anwendungsfall kann der Antriebsmotor 4 dann kraftstoffsparend mit niedrigerer Drehzahl betrieben werden, da jede der Hydropumpen 6, 7 einen Ölstrom zu dem entsprechenden Hydromotor 11 leitet, sodass dessen Antriebsenergie in Summe ausreicht, das Fahrzeug 1 mit der gewünschten Fahrgeschwindigkeit zu bewegen.

Damit die im Folgenden näher erläuterte erfindungsgemäße Zu- und Abschaltung eines oder mehrerer der den Fahrzeugachsen 13, 19 zugeordneten Hydromotoren 11, 24 möglich wird sind den Abtriebswellen 29, 30 der Fahrzeugachsen 13, 19 und den jeweiligen Hydromotoren Drehzahlsensoren 31-34 zugeordnet, die die jeweiligen Drehzahlen detektieren und als Drehzahlsignale I zumindest einer Steuer- und Regeleinrichtung 35 übermitteln. Soll nun das im Vorderachsantrieb betriebene Fahrzeug 1 während der Fahrt auf Allradantrieb umgeschaltet werden, muss die die Lenkfunktion übernehmende Hinterachse 20 mit Antriebsenergie versogt werden, sodass sie als Lenktriebachse 21 fungieren kann.

In einem ersten Schritt a) wird der zunächst ausgekuppelte, der Hinterachse 20 zugeordnete Hydromotor 24 auf ein geringes oder Nullfördervolumen für das energieführende Medium, hier Hydrauliköl, geschwenkt, wobei Verschenken hier bedeutet, dass in an sich bekannter Weise die nicht dargestellte Schwenkscheibe des Hydromotors 24 in eine die Fördermenge des Mediums reduzierende oder ganz unterbindende Position bewegt wird. In diesem Fall wird das Fahrzeug 1 ausschließlich über die Vorderachse 14 mittels des ihr zugeordneten Hydromotors 11 angetrieben. Wie bereits beschrieben, können bei Abschaltung des der Hinterachse 20 zugeordneten Hydromotors 24 die dem Antriebsmotor 4 zugeordneten Hydropumpen 6, 7 über die Ventilanordnung 27 zusammengeschaltet werden und gemeinschaftlich den der Vorderachse 14 zugeordneten Hydromotor 11 mit Antriebsenergie versorgen.

In einem nächsten Schritt b) wird die dem Hydromotor 24 der Hinterachse 20 zugeordnete Hydropumpe 7 ebenfalls auf ein geringes oder Nullfördervolumen verschwenkt, sodass in dem der Hinterachse 20 zugeordneten Teilkreislauf 9 des Hydraulikkreislaufes 10 kein Hydraulikmedium fliest und der besagte Hydromotor 24 still steht. Auch in Schritt b) wird das Fahrzeug 1 ausschließlich über die Vorderachse 14 mittels des ihr zugeordneten Hydromotors 11 angetrieben. Sofern die Hydropumpen 6, 7 in Schritt a) gemeinschaftlich zum Antrieb des der Vorderachse 14 zugeordneten Hydromotors 11 genutzt werden, muss in Schritt b) sodann für die Trennung der ersten und zweiten Teilkreisläufe 8, 9 des Hydraulikkreislaufs 10 gesorgt werden. Dies geschieht in der Weise, dass die ersten und zweiten Teilkreisläufe 8, 9 durch Schalten der in den Hydraulikkreislauf 10 integrierten Ventilanordnung 27 voneinander getrennt werden.

In einem nunmehr folgenden Schritt c) wird die nicht dargestellte Schwenkscheibe des der Hinterachse 20 zugeordneten Hydromotors 24 ausgeschwenkt, wobei durch Anpassung der Fördermengen dieses Hydromotors 24 und der ihm zugeordneten Hydropumpe 7 eine Drehzahlanpassung dieses Hydromotors 24 bewirkt wird.

In einem sich an Schritt c) anschließenden Schritt d) werden die mittels der bereits beschriebenen Drehzahlsensoren 33, 34 erfassten Drehzahlen der Abtriebswelle 30 der Hinterachse 20 und des ihr zugeordneten Hydromotors 24 in der Weise synchronisiert, dass aus den der Steuer- und Regeleinrichtung 35 übermittelten Drehzahlsignalen I in dieser ein Steuerscheibenschwenksignal S1 generiert und an den Hydromotor 24 übermittelt wird. Das Steuerscheibenschwenksignal S1 bewirkt, dass das Schluckvolumen des betreffenden Hydromotors 24 und damit dessen Abtriebsdrehzahl so geändert wird, dass sich eine Synchronisation der Drehzahlen des Hydromotors 24 und der Abtriebswelle 30 der Hinterachse 20 einstellt.

Nach erfolgter Synchronisation der Drehzahlen erfolgt in einem Schritt e) durch Aktivierung der der Hinterachse 20 zugeordneten, als Klauenkupplung 25 ausgeführten Kupplung 26 das Einkuppeln des Hydromotors 24. Dies führt dazu, dass die Hinterachse 20 als Lenktriebachse 21 fungiert und das Fahrzeug 1 im Allradbetrieb läuft.

Je nach Einsatzbedingungen des Fahrzeugs 1 wird die landwirtschaftliche Arbeitsmaschine schließlich in einem als Schritt f) bezeichneten Betriebsstadium in der Weise betrieben, dass entweder beide Teilkreisläufe 8, 9 des Hydraulikkreislaufes 10 getrennt oder durch Öffnen der Ventilanordnung 27 gemeinsam betrieben werden.

Soll schließlich die Allradfunktion während der Fahrt und ohne dass das Fahrzeug 1 anhält wieder abgeschaltet werden, sind die Schritte a bis f in umgekehrter Reihenfolge zu durchlaufen.

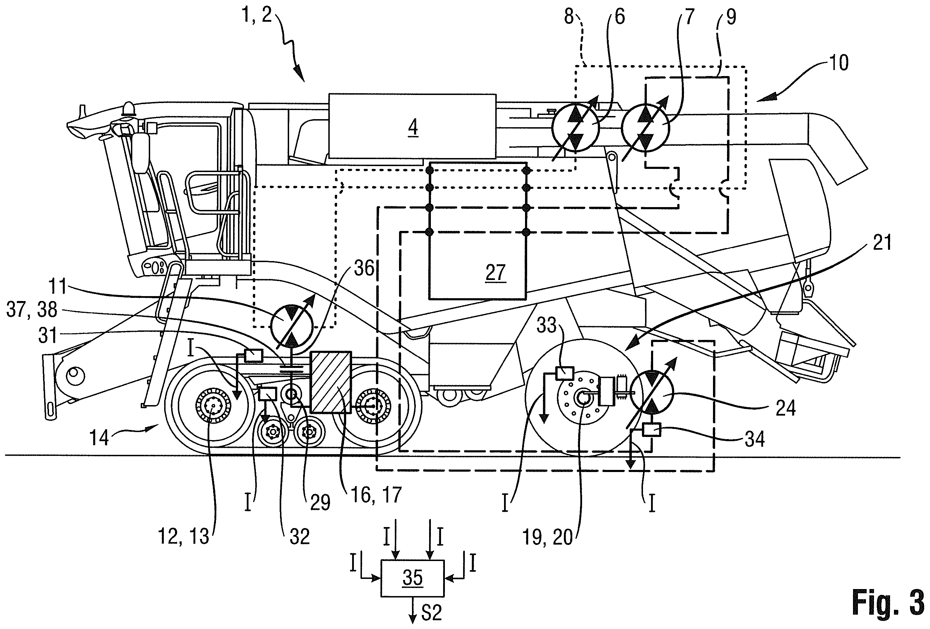

Der erfindungsgemäß strukturierte Hydraulikkreislauf 10 kann in einer vorteilhaften Ausgestaltung der Erfindung gemäß Figur 3 auch genutzt werden, um das der als Triebachse 12 ausgeführten Fahrzeugachse 13 zugeordnete und in Stufen 16 schaltbare Getriebe 17 während der Fahrt des Fahrzeugs 1 im Allradbetrieb zu schalten. Damit das Schalten der Getriebestufen 16 während der Fahrt des Fahrzeugs 1 im Allradbetrieb möglich wird muss das Fahrzeug 1 wiederum eine bestimmte Reihenfolge von Betriebsstadien durchlaufen.

Sofern beim Fahren des Fahrzeug 1 im Allradbetrieb beide Teilkreisläufe 8, 9 des Hydraulikkreislaufs 10 gemeinsam betrieben werden müssen in einem Schritt a) zunächst durch Schalten der in den Hydraulikkreislauf 10 integrierten Ventilanordnung 27 die beiden Teilkreisläufe 8, 9 voneinander getrennt werden. In einem Schritt b) müssen die Schluckvolumina der in den Teilkreislauf 8 der Triebachse 12 integrierten Hydropumpe 6 und Hydromotor 11 derart geregelt werden, sodass der der Vorderachse 14 zugeordnete Antriebsstrang lastfrei und das Fahrzeug ausschließlich durch die als Lenktriebachse 21 fungierende Hinterachse 20 angetrieben wird. In einem nächsten Schritt c) wird das der Vorderachse 14 zugeordnete, in Stufen 16 schaltbare Getriebe 17 in den Neutralgang geschaltet. In einem sich daran anschließenden, als Schritt d) bezeichneten Betriebsstadium wird das Schluckvolumen des der Vorderachse 14 zugeordneten Hydromotors 11 und/oder der Vorderachse 14 zugeordneten Hydropumpe 6 in der Weise geändert, dass sich an der Abtriebswelle 36 des Hydromotors 11 eine der gewählten Fahrstufe 16 des schaltbaren Getriebes 17 entsprechende Drehzahl einstellt. Diese Synchronisation wird in Analogie zu der beschriebenen Zu- oder Abschaltung des Hinterachsantriebs dadurch bewirkt, dass die mittels der bereits beschriebenen Drehzahlsensoren 31, 32 generierten Drehzahlsignale I der Abtriebswelle 29 der Vorderachse 14 und des ihr zugeordneten Hydromotors 11 an die Steuer- und Regeleinrichtung 35 übermittelten werden. Die Steuer- und Regeleinrichtung 35 generiert aus diesen Drehzahlsignalen I ein Steuerscheibenschwenksignal S2, welches an den Hydromotor 11 und/oder die Hydropumpe 6 übermittelt wird. Das Steuerscheibenschwenksignal S2 bewirkt, dass das Schluckvolumen des betreffenden Hydromotors 11 und damit dessen Abtriebsdrehzahl so geändert wird, dass sich eine Synchronisation der Drehzahlen des Hydromotors 11 und der gewählten Schaltstufe 16 des Getriebes 17 einstellt.

Indem auch dem von der Vorderachse 14 aufgenommenen Hydromotor 11 eine Kupplung 37, im einfachsten Fall ebenfalls eine Klauenkupplung 38 zugeordnet ist, kann der Hydromotor 11 in einem Schritt e) schließlich durch Aktivierung der Kupplung 37 wieder in den nicht näher dargestellten Antriebsstrang der Vorderachse 14 eingekuppelt werden, sodass das Fahrzeug 1 dann wieder im Allradbetrieb und der neuen Schaltstufe 16 fährt, ohne dass das Fahrzeug 1 zum Schaltstufenwechsel anhalten musste.

In Analogie zur beschriebenen Zu- und Abschaltung der Allradfunktion können je nach Einsatzbedingungen des Fahrzeugs 1 schließlich in einem als Schritt f) bezeichneten Betriebsstadium beide Teilkreisläufe 8, 9 des Hydraulikkreislaufes 10 getrennt oder durch Öffnen der Ventilanordnung 27 gemeinsam betrieben werden.

**Bezugszeichenliste:**

| | | | |
|---|---|---|---|
| 1 | Fahrzeug | 31-34 | Drehzahlsensoren |
| 2 | Landwirtschaftliche Arbeitsmaschine | 35 | Steuer- und Regeleinrichtung |
| 3 | Mähdrescher | 36 | Abtriebswelle |
| 4 | Antriebsmotor | 37 | Kupplung |
| 5 | Abtriebswelle | 38 | Klauenkupplung |
| 6 | Hydropumpe | | |
| 7 | Hydropumpe | | |
| 8 | Teilkreislauf | | |
| 9 | Teilkreislauf | | |
| 10 | Hydraulikkreislauf | I | Drehzahlsignal |
| 11 | Hydromotor | S1,S2 | Steuerscheibenschwenksignal |
| 12 | Triebachse | | |
| 13 | Fahrzeugachse | | |
| 14 | Vorderachse | | |
| 15 | Raupenfahrwerk | | |
| 16 | Schaltstufen | | |
| 17 | Getriebe | | |
| 18 | Triebrad | | |
| 19 | Fahrzeugachse | | |
| 20 | Hinterachse | | |
| 21 | Lenktriebachse | | |
| 22 | Boden | | |
| 23 | Laufräder | | |
| 24 | Hydromotor | | |
| 25 | Klauenkupplung | | |
| 26 | Kupplung | | |
| 27 | Ventilanordnung | | |
| 28 | Hydrostatische Antriebseinheit | | |
| 29 | Abtriebswelle | | |
| 30 | Abtriebswelle | | |

## Patentansprüche

1. Fahrzeug (1), vorzugsweise selbstfahrende landwirtschaftliche Arbeitsmaschine (2) zumindest einen Antriebsmotor (4) und eine hydrostatische Antriebseinheit (28) umfassend, wobei zumindest eine erste und eine zweite Fahrzeugachse (13, 19) über einen die hydrostatische Antriebseinheit (28) umfassenden Hydraulikkreislauf (10) mit dem Antriebsmotor (4) gekoppelt ist,
wobei der Antriebsmotor (4) mit zumindest einer ersten und einer zweiten Hydropumpe (6, 7) gekoppelt ist und jeder der Fahrzeugachsen (13, 19) ein Hydromotor (11, 24) zugeordnet ist der von jeweils zumindest einer der Hydropumpen (6, 7) gespeist wird, **dadurch gekennzeichnet, dass** zumindest einer der Hydromotoren (24) mittels einer als Klauenkupplung (25) ausgeführten Kupplung (26) des Fahrzeugs (1), von der mit dem jeweiligen Hydromotor (24) in Wirkverbindung stehenden Fahrzeugachse (13, 19) in der Weise entkuppel- oder kuppelbar ist, dass eine Allradfunktion des Fahrzeugs (1) während der Bewegung des Fahrzeugs (1) aktivier- und deaktivierbar ist.

2. Fahrzeug nach Anspruch 1,
**dadurch gekennzeichnet,**
**dass** der Hydraulikkreislauf (10) zumindest erste und zweite Teilkreisläufe (8, 9) umfasst, denen jeweils zumindest eine der Hydropumpen (6, 7) und einer der mit dieser koppelbaren Hydromotoren (11, 24) zugeordnet sind, wobei die Teilkreisläufe (8, 9) über eine Ventilanordnung (27) in der Weise miteinander gekoppelt sind, dass die Teilkreisläufe (8, 9) unabhängig voneinander betrieben oder zusammengeschaltet werden können.

3. Fahrzeug nach Anspruch 2,
**dadurch gekennzeichnet,**
**dass** die ersten und zweiten Teilkreisläufe (8, 9) zusammengeschaltet und die Hydropumpen (6, 7) beider Teilkreisläufe (8, 9) parallel geschaltet sind und gemeinschaftlich den zumindest einer Triebachse (12) zugeordneten Hydromotor (11) antreiben.

4. Fahrzeug nach Anspruch 3,
**dadurch gekennzeichnet,**
**dass** bei Parallelschaltung der dem Hydraulikkreislauf (10) zugeordneten Hydropumpen (6, 7) der Antriebsmotor (4) mit reduzierter Drehzahl betrieben werden kann.

5. Fahrzeug nach einem der vorhergehenden Ansprüche,
**dadurch gekennzeichnet,**
**dass** jede der Fahrzeugachsen (13, 19) eine Abtriebswelle (29, 30) aufweist und wobei Mittel vorgesehen sind, da die Drehzahl jeder Abtriebswelle (29, 30) und die Drehzahl des der jeweiligen Fahrzeugachse (13, 19) zugeordneten Hydromotors (11, 24) zu detektieren.

6. Fahrzeug nach Anspruch 5,
**dadurch gekennzeichnet,**
**dass** Mittel vorgesehen sind, die die Drehzahl der Hydromotoren (11, 24) und der Abtriebswellen (29, 30) der Fahrzeugachsen (13, 19) sensorisch erfassen .

7. Fahrzeug nach einem der Ansprüche 5 oder 6,
**dadurch gekennzeichnet,**
**dass** zumindest eine der Fahrzeugachsen (13) als Lenktriebachse (21) ausgeführt ist, wobei Mittel vorgesehen sind, die das Einkuppeln des der Lenktriebachse (21) zugeordneten Hydromotors (24) in der Weise ermöglichen, dass
a. der Hydromotor (24) in ausgekuppeltem Zustand auf ein geringes oder Nullfördervolumen geschwenkt ist
b. die dem Hydromotor (24) zugeordnete Hydropumpe (7) auf ein geringes oder Nullfördervolumen geschwenkt wird
c. der der Lenktriebachse (21) zugeordnete Hydromotor (24) ausgeschwenkt wird und durch Anpassung des Verhältnisses der Schluckvolumina dieses Hydromotors (24) und der ihm zugeordneten Hydropumpe (7) eine Drehzahlanpassung des Hydromotors (24) erfolgt
d. die Drehzahl der Abtriebswelle (30) der Lenktriebachse (21) erfasst und die Drehzahl des Hydromotors (24) mit der sensierten Drehzahl der Abtriebswelle (30) der Lenktriebachse (21) synchronisiert wird
e. nach erfolgter Synchronisation der Hydromotor (24) eingekuppelt wird.

8. Fahrzeug nach Anspruch 7;
**dadurch gekennzeichnet, dass**
das Fahrzeug (1) zumindest im Schritte a im Vorderradantrieb betrieben wird und eine oder mehrere der mit dem Antriebsmotor (4) gekoppelten Hydropumpen (6, 7) zum Antrieb des einer Triebachse (12) zugeordneten Hydromotors (11) eingesetzt werden.

9. Fahrzeug nach Anspruch 7 und 2,
**dadurch gekennzeichnet, dass**
im Schritt b die ersten und zweiten Teilkreisläufe (8, 9) des Hydraulikkreislaufs (10) mittels der dem Hydraulikkreislauf (10) zugeordneten Ventilanordnung (27) voneinander getrennt werden.

10. Fahrzeug nach Anspruch 7,
**dadurch gekennzeichnet, dass**
im Schritt d die Sensierung der Drehzahlen mittels Drehzahlsensoren (31-34) erfolgt.

11. Fahrzeug nach Anspruch 7,
**dadurch gekennzeichnet, dass**
im Schritt e das Einkuppeln mittels mechanischer Klauenkupplungen (25) erfolgt.

12. Fahrzeug nach Anspruch 2 und einem oder mehreren der Ansprüche 7 bis 11,
**dadurch gekennzeichnet, dass**
nach Einkupplung des der Lenktriebachse (21) zugeordneten Hydromotors (24) in einem Schritt f beide Teilkreisläufe (8, 9) des Hydraulikkreislaufes (10) entweder getrennt oder durch Öffnen der Ventilanordnung (27) gemeinsam betrieben werden.

13. Fahrzeug nach einem oder mehreren der Ansprüche 7 bis 12,
**dadurch gekennzeichnet, dass**
das Auskuppeln des der Lenktriebachse (21) zugeordneten Hydromotors (24) durch Abarbeitung der Schritte a bis f in umgekehrter Reihenfolge erfolgt.

14. Fahrzeug nach einem oder mehreren der vorhergehenden Ansprüche,
**dadurch gekennzeichnet, dass**
eine der Fahrzeugachsen (13) als Triebachse (12) ausgebildet und ein in Stufen (16) schaltbares Getriebe (17) zugeordnet ist, wobei die Schaltung des Getriebes (17) bei zugeschaltetem Allradantrieb erfolgt.

15. Fahrzeug nach Anspruch 14 und 2,
**dadurch gekennzeichnet,**
**dass** die Schaltung der Stufen (16) des Getriebes (17) die Schritte
a. die Teilkreisläufe (8, 9) des Hydraulikkreislaufs (10) werden durch Schalten der Ventilanordnung (27) voneinander getrennt
b. die Schluckvolumina der in den Teilkreislauf (8) der als Triebachse (12) fungierenden Vorderachse (14) integrierten Hydropumpe (6) und Hydromotor (11) werden synchronisiert
c. das der Vorderachse (14) zugeordnete, in Stufen (16) schaltbare Getriebe (17) wird in den Neutralgang geschaltet
d. die Drehzahl des der Vorderachse (14) zugeordneten Hydromotors (11) wird durch Änderung seines Schluckvolumens mit der Drehzahl der gewählten Schaltstufe (16) des in Stufen (16) schaltbaren Getriebes (17) synchronisiert
e. der Hydromotor (11) wird durch Aktivierung der der Vorderachse (14) zugeordneten Kupplung (37, 38) eingekuppelt
f. nach Einkupplung des Hydromotors (11) werden die Teilkreisläufe (8, 9) des Hydraulikkreislaufes (10) entweder getrennt betrieben oder durch Schaltung der Ventilanordnung (27) zusammengeschaltet.

## Claims

1. A vehicle (1), preferably a self-propelled agricultural working machine (2) comprising at least one propulsion engine (4) and a hydrostatic propulsion unit (28), wherein at least a first and a second vehicle axle (13, 19) are engaged with the propulsion engine (4) via a hydraulic circuit (10) comprising the hydrostatic propulsion unit (28), wherein the propulsion engine (4) is engaged with at least a first and a second hydrostatic pump (6, 7) and a hydrostatic motor (6, 7) is associated with each of the vehicle axles (13, 19) and each is supplied from at least one of the hydrostatic pumps (6, 7), **characterized in that** at least one of the hydrostatic motors (24) can be disengaged from or engaged with the vehicle axle (13, 19) which is operatively connected to the respective hydrostatic motor (24) by means of a clutch (26) of the vehicle (1) configured as a dog clutch (25) in a manner such that an all-wheel function of the vehicle (1) can be activated and deactivated as the vehicle (1) is in motion.

2. The vehicle according to claim 1,
**characterized in that**
the hydraulic circuit (10) comprises at least first and second sub-circuits (8, 9) with which at least one of the hydrostatic pumps (6, 7) and one of the hydrostatic motors (11, 24) which can be engaged therewith is respectively associated, wherein the sub-circuits (8, 9) are coupled together via a valve assembly (27) in a manner such that the sub-circuits (8, 9) can be operated independently of each other or connected together.

3. The vehicle according to claim 2,
**characterized in that**
the first and second sub-circuits (8, 9) are connected together and the hydrostatic pumps (6, 7) of both sub-circuits (8, 9) are connected in parallel and together drive the hydrostatic motor (11) associated with at least one drive axle (12).

4. The vehicle according to claim 3,
**characterized in that**
in the case of parallel connection of the hydrostatic pumps (6, 7) associated with the hydraulic circuit (10), the propulsion engine (4) can be operated at a reduced speed.

5. The vehicle according to one of the preceding claims,
**characterized in that**
each of the vehicle axles (13, 19) has an output shaft (29, 30) and wherein means are provided which detect the speed of each output shaft (29, 30) and the speed of the hydrostatic motor (11, 24) associated with the respective vehicle axle (13, 19).

6. The vehicle according to claim 5,
**characterized in that**
means are provided which detect the speed of the hydrostatic motors (11, 24) and of the output shafts (29, 30) of the vehicle axles (13, 19) using sensors.

7. The vehicle according to claim 5 or claim 6,
**characterized in that**
at least one of the vehicle axles (13) is configured as a rear wheel drive axle (21), wherein means are provided which enable engagement of the hydrostatic motor (24) associated with the rear wheel drive axle (21) in a manner such that
a. in the disengaged state, the hydrostatic motor (24) is swung to a low or zero delivery volume
b. the hydrostatic pump (7) associated with the hydrostatic motor (24) is swung to a low or zero delivery volume
c. the hydrostatic motor (24) associated with the rear wheel drive axle (21) is swung out and by adjusting the ratio of the displacement of this hydrostatic motor (24) and of the hydrostatic pump (7) associated therewith, the speed of the hydrostatic motor (24) is adjusted
d. the speed of the output shaft (30) of the rear wheel drive axle (21) is detected and the speed of the hydrostatic motor (24) is synchronised with the sensed speed of the output shaft (30) of the rear wheel drive axle (21)
e. after synchronisation is complete, the hydrostatic motor (24) is engaged.

8. The vehicle according to claim 7,
**characterized in that**
at least in step a., the vehicle (1) is operated in front wheel drive and one or more of the hydrostatic pumps (6, 7) engaged with the propulsion engine (4) is/are used to drive the hydrostatic motor (11) associated with a drive axle (12).

9. The vehicle according to claim 7 and claim 2,
**characterized in that**
in step b., the first and second sub-circuits (8, 9) of the hydraulic circuit (10) are separated from each other by means of the valve assembly (27) associated with the hydraulic circuit (10).

10. The vehicle according to claim 7,
**characterized in that**
in step d., sensing of the speeds is carried out by means of speed sensors (31 - 34).

11. The vehicle according to claim 7,
**characterized in that**
in step e., engagement is carried out by means of mechanical dog clutches (25).

12. The vehicle according to claim 2 and one or more of claims 7 to 11,
**characterized in that**
after engagement of the hydrostatic motor (24) associated with the rear wheel drive axle (21), in a step f., both sub-circuits (8, 9) of the hydraulic circuit (10) are operated either separately or together by opening the valve assembly (27).

13. The vehicle according to one or more of claims 7 to 12,
**characterized in that**
disengagement of the hydrostatic motor (24) associated with the rear wheel drive axle (21) is carried out by executing steps a. to f. in reverse order.

14. The vehicle according to one or more of the preceding claims,
**characterized in that**
one of the vehicle axles (13) is configured as a drive axle (12) and is associated with a gearbox (17) with gears (16) that can be shifted, wherein shifting the gears of the gearbox (17) is carried out with the all-wheel drive engaged.

15. The vehicle according to claim 14 and claim 2,
**characterized in that**
shifting of the gears (16) of the gearbox (17) involves the steps in which
a. the sub-circuits (8, 9) of the hydraulic circuit (10) are separated from each other by switching the valve assembly (27)
b. the displacement of the hydrostatic pump (6) integrated into the sub-circuit (8) of the front axle (14) functioning as the drive axle (12) and the hydrostatic motor (11) are synchronised
c. the gearbox (17) with gears (16) that can be shifted associated with the front axle (14) is put into neutral
d. the speed of the hydrostatic motor (11) associated with the front axle (14) is synchronised with the speed of the selected gear ratio (16) of the gearbox (17) with gears (16) that can be shifted by varying its displacement
e. the hydrostatic motor (11) is engaged by activating the clutch (37, 38) associated with the front axle (14)
f. after engaging the hydrostatic motor (11), the sub-circuits (8, 9) of the hydraulic circuit (10) are either operated separately or are connected together by switching the valve assembly (27).

## Revendications

1. Véhicule (1), de préférence machine de travail agricole automotrice (2) incluant au moins un moteur d'entraînement (4) et une unité d'entraînement hydrostatique (28), au moins un premier et un second essieu de véhicule (13, 19) étant couplés au moteur d'entraînement (4) par l'intermédiaire d'un circuit hydraulique (10) incluant l'unité d'entraînement hydrostatique (28), le moteur d'entraînement (4) étant couplé à au moins une première et une seconde pompe hydraulique (6, 7) et à chacun des essieux de véhicule (13, 19) étant associé un moteur hydraulique (11, 24) qui est alimenté par respectivement au moins une des pompes hydrauliques (6, 7), **caractérisé en ce que**, au moyen d'un accouplement (26) du véhicule (1) conformé en accouplement à griffes (25), au moins un des moteurs hydrauliques (24) peut être découplé de ou couplé à l'essieu de véhicule (13, 19) en liaison active avec le moteur hydraulique respectif, de sorte qu'une fonction de transmission intégrale du véhicule (1) peut être activée et désactivée pendant le déplacement du véhicule (1).

2. Véhicule selon la revendication 1, **caractérisé en ce que** le circuit hydraulique (10) inclut au moins des premier et second circuits partiels (8, 9) auxquels sont respectivement associés au moins une des pompes hydrauliques (6, 7) et un des moteurs hydrauliques (11, 24) couplables avec celle-ci, les circuits partiels (8, 9) étant couplés entre eux par l'intermédiaire d'un agencement de valves (27), de façon que les circuits partiels (8, 9) puissent être exploités indépendamment l'un de l'autre ou interconnectés.

3. Véhicule selon la revendication 2, **caractérisé en ce que** les premier et second circuits partiels (8, 9) sont interconnectés et les pompes hydrauliques (6, 7) des deux circuits partiels (8, 9) sont montées en parallèle et entraînent conjointement le moteur hydraulique (11) associé au moins à un essieu moteur (12).

4. Véhicule selon la revendication 3, **caractérisé en ce que**, en cas de montage en parallèle des pompes hydrauliques (6, 7) associées au circuit hydraulique (10), le moteur d'entraînement (4) peut être exploité avec une vitesse de rotation réduite.

5. Véhicule selon une des revendications précédentes, **caractérisé en ce que** chacun des essieux de véhicule (13, 19) comporte un arbre mené (29, 30), et des moyens étant prévus pour détecter la vitesse de rotation de chaque arbre mené (29, 30) et la vitesse de rotation du moteur hydraulique (11, 24) associé à l'essieu de véhicule respectif (13, 19).

6. Véhicule selon la revendication 5, **caractérisé en ce que** des moyens sont prévus pour détecter au moyen de capteurs la vitesse de rotation des moteurs hydrauliques (11, 24) et des arbres menés (29, 30) des essieux de véhicule (13, 19).

7. Véhicule selon une des revendications 5 ou 6, **caractérisé en ce qu'**au moins un des essieux de véhicule (13) est conformé en essieu directeur à roues motrices (21), des moyens étant prévus pour permettre l'accouplement du moteur hydraulique (24) associé à l'essieu directeur à roues motrices (21), de façon que
a. le moteur hydraulique (24), à l'état désaccouplé, soit basculé sur un volume de refoulement faible ou nul
b. la pompe hydraulique (7) associée au moteur hydraulique (24) soit basculée sur un volume de refoulement faible ou nul
c. le moteur hydraulique (24) associé à l'essieu directeur à roues motrices (21) soit sollicité et qu'une adaptation de la vitesse de rotation du moteur hydraulique (24) s'effectue par adaptation du rapport de volume d'aspiration de ce moteur hydraulique (24) et de la pompe hydraulique (7) qui lui est associée,
d) la vitesse de rotation de l'arbre de sortie (30) de l'essieu directeur à roues motrices (21) soit détectée et que la vitesse de rotation du moteur hydraulique (24) soit synchronisée avec la vitesse de rotation captée de l'arbre de sortie (30) de l'essieu directeur à roues motrices (21)
e. au terme de la synchronisation, le moteur hydraulique (24) soit accouplé.

8. Véhicule selon la revendication 7, **caractérisé en ce que**, au moins à l'étape a, le véhicule (1) est exploité en traction avant et une ou plusieurs des pompes hydrauliques (6, 7) couplées au moteur d'entraînement (4) sont mises en œuvre pour entraîner le moteur hydraulique (11) associé à un essieu moteur (12).

9. Véhicule selon la revendication 7 et 2, **caractérisé en ce que**, à l'étape b, les premier et second circuits partiels (8, 9) du circuit hydraulique (10) sont séparés l'un de l'autre au moyen de l'agencement de valves (27) associé au circuit hydraulique (10).

10. Véhicule selon la revendication 7, **caractérisé en ce que**, à l'étape d, le captage des vitesses de rotation s'effectue au moyen de capteurs de vitesse de rotation (31-34).

11. Véhicule selon la revendication 7, **caractérisé en ce que**, à l'étape e, l'accouplement s'effectue au moyen d'accouplements mécaniques à griffes (25).

12. Véhicule selon la revendication 2 et une ou plusieurs des revendications 7 à 11, **caractérisé en ce que**, après accouplement du moteur hydraulique (24) associé à l'essieu directeur à roues motrices (21), à l'étape f, les deux circuits partiels (8, 9) du circuit hydraulique (10) sont exploités soit séparément ou conjointement par ouverture de l'agencement de valves (27).

13. Véhicule selon une ou plusieurs des revendications 7 à 12, **caractérisé en ce que** le désaccouplement du moteur hydraulique (24) associé à l'essieu directeur à roues motrices (21) s'effectue en accomplissant les étapes a à f dans l'ordre inverse.

14. Véhicule selon une ou plusieurs des revendications précédentes, **caractérisé en ce qu'**un des essieux de véhicule (13) est conformé en essieu moteur (12) et une transmission (17) à changement de rapports (16) est associée, le changement de rapport de la transmission (17) s'effectuant lorsque la transmission intégrale est engagée.

15. Véhicule selon la revendication 14 et 2, **caractérisé en ce que** le changement des rapports (16) de la transmission (17) comprend les étapes suivantes
a. les circuits partiels (8, 9) du circuit hydraulique (10) sont séparés l'un de l'autre par commutation de l'agencement de valves (27)
b. le volume d'aspiration de la pompe hydraulique (6) intégrée au circuit partiel (8) de l'essieu avant (14) faisant fonction d'essieu moteur (12) et celui du moteur hydraulique (11) sont synchronisés
c. la transmission (17) à changement de rapports (16) associée à l'essieu avant (14) est amenée au point mort
d. la vitesse de rotation du moteur hydraulique (11) associé à l'essieu avant (14) est synchronisée, par modification de son volume d'aspiration, avec la vitesse de rotation du rapport sélectionné (16) de la transmission (17) à changement de rapports (16)
e. le moteur hydraulique (11) est accouplé par actionnement de l'accouplement (37, 38) associé à l'essieu avant (14)
f. après accouplement du moteur hydraulique (11), les circuits partiels (8, 9) du circuit hydraulique (10) sont soit exploités séparément soit interconnectés par commutation de l'agencement de valves (27).
